# EUROPÄISCHE PATENTSCHRIFT

(11) **EP 1 033 048 B1**
(45) Veröffentlichungstag und Bekanntmachung des Hinweises auf die Patenterteilung: **02.04.2008**
(21) Anmeldenummer: 99923542.7
(22) Anmeldetag: 06.05.1999
(51) Int. Cl.: H04Q 7/32

(54) **Mobilfunksystem mit dynamisch änderbarer Identität eines mobilen Endgerätes**
Mobile radio telephone system having a mobile station identity which can be dynamically changed
Système radio mobile à identité d'une station mobile modifiable de manière dynamique

(30) Priorität: 29.06.1998 DE 19828735
(43) Veröffentlichungstag der Anmeldung: 06.09.2000
(73) Patentinhaber: Giesecke & Devrient GmbH, 81677 München (DE)
(72) Erfinder: PAPADOPOULOS, Nikolaos, Ashburn, Virginia 20147 (US); VEDDER, Klaus, D-80801 München (DE)
(74) Vertreter: Höhfeld, Jochen
(86) Internationale Anmeldenummer: PCT/EP1999/003107
(87) Internationale Veröffentlichungsnummer: WO 2000/001179

(56) Entgegenhaltungen:
- EP-A- 0 562 890
- EP-A- 0 681 408
- WO-A-92/19078
- MOULY M.; PAUTET M.-B.: 'The GSM system for mobile communications', 1993, EUROPE MEDIA, LASSAY-LES-CHATEAUX, FR * Seite 432 - Seite 498 *

## Beschreibung

Die Erfindung betrifft ein Mobilfunksystem mit einer Vielzahl von mobilen Endgeräten, welche über eine Luftschnittstelle mit einer Mobilfunkzentrale zur Kommunikationssteuerung und gegebenenfalls zur Abrechnungserstellung verbunden sind, wie dies im Oberbegriff des Anspruchs 1 bzw. Anspruchs 2 angegeben ist. Desweiteren betrifft die Erfindung ein Verfahren zum Betrieb von mobilen Endgeräten eines Mobilfunksystems gemäß dem Oberbegriff des Anspruchs 6 sowie ein Teilnehmer-Kennungs-Modul für ein mobiles Endgerät gemäß dem Oberbegriff des Anspruchs 13.

Bei den bekannten Mobilfunksystemen, beispielsweise dem GSM-Netz, sind üblicherweise die mobilen Endgeräte über eine Luftschnittstelle mit einer Mobilfunkzentrale verbunden. Die mobilen Endgeräte werden durch ein Teilnehmer-Kennungs-Modul gesteuert. Dieses Teilnehmer-Kennungs-Modul ist üblicherweise in Form einer Chipkarte im ID-1- oder ID-000-Format ausgebildet, welche entfernbar im mobilen Endgerät angeordnet ist. Das Teilnehmer-Kennungs-Modul (SIM) dient unter anderem dazu, der berechtigten Person Zugang zum Mobilfunk-Netz zu gewähren und eine Gebührenabrechnung zuzulassen. Zu diesem Zweck enthält das SIM eine Teilnehmer-Identität (International Mobil Subscriber Identity, IMSI), mit welcher der Teilnehmer weltweit in allen GSM-Netzen identifiziert werden kann. Der Teilnehmer-Identität ist üblicherweise das Abrechnungskonto zugeordnet, über das die Gebührenabrechnung abgewickelt wird. Eine nur lokal eindeutige Nummer (TMSI) ordnet das Netz unaufgefordert dem Teilnehmer zu. Das entsprechende GSM-System wird beispielsweise in dem Buch "The GSM system for mobile communications" von Mouly und Pautet beschrieben.

Insbesondere bei der Doppelnutzung (z.B. dienstliche und private Nutzung) eines Mobiltelefons hat es sich als vorteilhaft erwiesen, das Teilnehmer-Kennungs-Modul mit mindestens einer weiteren Identität auszustatten. Aus der europäischen Patentschrift EP 0 579 655 B1 ist ein Verfahren für mobile Telefonsysteme bekannt, welche durch Teilnehmer-Kennungs-Module gesteuert werden, die jeweils mindestens zwei wahlweise verwendbare Kennungen enthalten. Der Benutzer kann bei Inbetriebnahme der mobilen Einheit durch die Einschubrichtung des Teilnehmer-Kennungs-Moduls oder durch Tastaturauswahl mittels Eingabe einer persönlichen Identifikationsnummer (PIN-Eingabe) die gewünschte Kennung aktivieren.

Der Nachteil des bekannten Verfahrens besteht darin, daß bereits bei der Kartenausgabe die wahlweise verwendbaren Kennungen in der Karte abgelegt werden müssen. In der Praxis heißt das, daß bereits bei Antragstellung eines Mobilfunk-Anschlusses die Anzahl der wahlweise verwendbaren Kennungen bekannt sein muß. Insbesondere für den Fall, daß später eine neue Kennung zugeteilt werden soll, ist dies nur in Verbindung mit der Ausstellung einer neuen Karte, d.h. eines neuen Teilnehmer-Kennungs-Moduls möglich.

Aufgabe der Erfindung ist es deshalb, ein Mobilfunksystem sowie ein Verfahren zum Betreiben des Mobilfunksystems und ein Teilnehmer-Kennungs-Modul anzugeben, bei dem die oben genannten Nachteile vermieden werden.

Diese Aufgabe wird durch ein Mobilfunksystem gemäß den Ansprüchen 1 und 2 sowie durch ein Verfahren gemäß Anspruch 6 und ein Teilnehmer-Kennungs-Modul gemäß Anspruch 13 gelöst.

Vorteilhafte Ausgestaltungen der Erfindung sind in den abhängigen Ansprüchen angegeben.

Gemäß Anspruch 1 ist ein Mobilfunksystem vorgesehen, bei dem das Teilnehmer-Kennungs-Modul, welches zur Steuerung der mobilen Endgeräte dient, eine Berechnungsvorschrift enthält, durch die aus der gespeicherten Identität mindestens eine weitere Identität berechnet werden kann. Entsprechend der Berechnungsvorschrift erzeugte Identitäten werden in der Mobilfunkzentrale entsprechend zugeordnet. Eine Alternative zur Lösung des oben genannten Problems gemäß Anspruch 2 besteht darin, daß das Teilnehmer-Kennungs-Modul so ausgelegt ist, daß ein Anforderungssignal erzeugt werden kann, welches der Mobilfunkzentrale übermittelt und dort verarbeitet wird, woraufhin dem Teilnehmer-Kennungs-Modul über die Luftschnittstelle eine alternative Identität mitgeteilt wird.

Der Vorteil der Lösung gemäß den Ansprüchen 1 und 2 besteht darin, daß auf der Chipkarte, d.h. dem Teilnehmer-Kennungs-Modul nicht alle Identitäten abgespeichert werden müssen. Dadurch wird das System flexibler handhabbar, da auch nach der Kartenausgabe an den Nutzer, d.h. nach Antragstellung, die zusätzlichen Identitäten zugeordnet werden können. Es wird damit für den Besitzer eines Mobiltelefons, dem eine Identität zugeordnet ist, ermöglicht, zu einem späteren Zeitpunkt eine zweite Identität zu erhalten, ohne daß eine neue Karte ausgestellt werden muß.

Gemäß einer vorteilhaften Ausgestaltung der Erfindung wird die Berechnung bzw. die Anforderung für eine neue Identität durch den Bediener mittels Tastatureingabe oder menügesteuert ausgelöst. Im einfachsten Fall kann im Mobiltelefon ein Umschalter vorgesehen sein, der zwei oder mehrere Schaltpositionen aufweist, welche jeweils einen zugeordneten Berechnungsvorgang auslösen. Die alternative menügesteuerte Auslösung hat den Vorteil, daß die Menüdarstellung vom Teilnehmer-Kennungs-Modul gesteuert werden kann, so daß im mobilen Endgerät keine Änderungen vorgenommen werden müssen. Dieser Vorteil trifft auch auf eine weitere vorteilhafte Ausgestaltung der Erfindung zu, gemäß der die Berechnung bzw. Anforderung für eine neue Identität durch die Eingabe einer PIN initialisiert wird. In diesem Fall sind im Teilnehmer-Kennungs-Modul mehrere persönliche Identifikationsnummern abgespeichert, mit denen sich der Benutzer als berechtigt identifiziert. Die Eingabe einer PIN löst dann, neben der Funktionsfreigabe auch die Berechnung der gewünschten Teilnehmeridentität aus, falls diese nicht der originären Identität entspricht.

Da die mobilen Endgeräte eines Mobilfunksystems häufig auch in Fremdnetzen betrieben werden, hat es sich als vorteilhaft erwiesen, zusammen mit der weiteren Identität auch einen weiteren Verzeichniseintrag (Telefonnummer) und/oder einen weiteren Authentifizierungsschlüssel zu berechnen. Insbesondere der weitere Verzeichniseintrag hat den Vorteil, daß das mobile Endgerät nur mit der im Verzeichniseintrag entsprechenden Telefonnummer erreichbar ist. Auf diese Weise kann der Nutzer sicherstellen, daß er beispielsweise bei einem Privataufenthalt im Bereich eines fremden Netzes auch nur private Anrufe erhält. Auch bei der Weiterleitung eines "dienstlichen" Anrufes, d.h. bei einem Anruf auf die momentan nicht ausgewählte Telefonnummer kann durch die unterschiedlichen Telefonnummern, mit denen der Benutzer angewählt werden kann, eine Zuordnung der im Fremdnetz entstehenden Kosten, die dem Benutzer zugeordnet werden, erfolgen.

Die Erfindung betrifft im weiteren ein Verfahren zum Betrieb vom mobilen Endgeräten, welches aus einer einzigen, im Teilnehmer-Kennungs-Modul gespeicherten Identität die weiteren Identitäten durch eine Berechnungsvorschrift bei Bedarf erzeugt. Das Verfahren bietet den bereits für das Mobilfunksystem gemäß der Erfindung angegebenen Vorteil, daß nicht mehrere Identitäten in einer Karte gespeichert werden müssen, sondern das System flexibler arbeiten kann, indem nicht bereits bei Ausgabe der Karte alle möglicherweise verwendeten Identitäten abgespeichert werden müssen.

Gemäß der Erfindung kann die Berechnung der neuen Identität entweder im Teilnehmer-Kennungs-Modul ausgeführt werden oder in der Mobilfunkzentrale, wobei in diesem Fall von dem mobilen Endgerät eine Anforderung an die Mobilfunkzentrale gesendet wird und die neue Identität über die Luftschnittstelle des Mobilfunksystems dem mobilen Endgerät und damit dem Teilnehmer-Kennungs-Modul mitgeteilt wird.

Das erfindungsgemäße Verfahren sieht als weitere vorteilhafte Ausgestaltung vor, daß bei jeder Identität zur Überprüfung, welche auf Anforderung der Mobilfunkzentrale oder des mobilen Endgeräts durchgeführt wird, die jeweils aktuelle Identität neu berechnet wird. Auf diese Weise muß im Teilnehmer-Kennungs-Modul kein Speicherplatz vorgesehen werden, in dem weitere Identitäten abgespeichert sind.

Sollte, beispielsweise aufgrund der für die Berechnung erforderlichen Berechnungszeit die jeweils aktuelle Identität schneller greifbar sein müssen, ist es auch möglich, die jeweils eingestellte Identität temporär im Teilnehmer-Kennungs-Modul zwischenzuspeichern.

Die Erfindung schlägt weiterhin ein Teilnehmer-Kennungs-Modul für ein mobiles Endgerät in einem Mobilfunksystem vor, das zum Einsatz für das oben genannte Verfahren geeignet ist. Hierzu ist im Teilnehmer-Kennungs-Modul eine Berechnungsvorschrift abgelegt, welche aus der gespeicherten Identität mindestens eine weitere Identität berechnen kann. Alternativ kann das Teilnehmer-Kennungs-Modul zur Erzeugung eines Anforderungssignales ausgelegt sein. In diesem Fall initialisiert das Teilnehmer-Kennungs-Modul die Berechnung der neuen Identität in der Netz-Zentrale, die Berechnung der alternativen oder weiteren Identität wird also nicht in der Karte, d.h. im Teilnehmer-Kennungs-Modul erzeugt.

Im folgenden werden bevorzugte Ausführungsbeispiele der Erfindung anhand der Figuren 1-5 näher erläutert.

Es zeigen:
Figur 1 den grundlegenden Aufbau eines Mobilfunknetzes,
Figur 2 das Blockschaltbild eines Teilnehmer-Kennungs-Moduls,
Figur 3 einen ersten Ablaufplan, der dynamischen IMSI-Auswahl
Figur 4 einen zweiten Ablaufplan der dynamischen IMSI-Auswahl, und
Figur 5 eine beispielhafte Menüdarstellung.

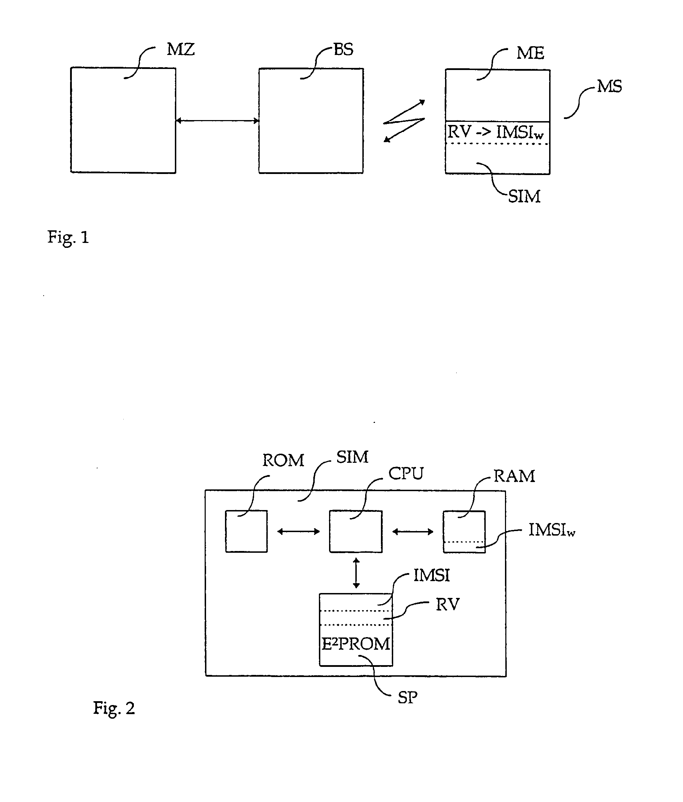

Die Figur 1 zeigt ein Mobilfunksystem bestehend aus einer Mobilfunkzentrale MZ, einem Basisstationssystem BS und einer mobilen Station MS, bestehend aus einem mobilen Endgerät ME und einem Teilnehmer-Kennungs-Modul SIM. Das Teilnehmer-Kennungs-Modul SIM ist eine mobilfunkspezifische Chipkarte, die in Verbindung mit dem mobilen Endgerät ME eine funktionsfähige mobile Station MS ergibt. Im Teilnehmer-Kennungs-Modul sind alle Daten abgelegt, die notwendig sind, um den Zugang zum Netz nur berechtigten Personen zu gewähren und eine Gebührenabrechnung zu erstellen. Die wesentlichen Aufgaben des Teilnehmer-Kennungs-Moduls liegen in der Authentisierung gegenüber dem Mobilfunksystem und in der Speicherung von benutzerspezifischen Daten. Im Teilnehmer-Kennungs-Modul sind insbesondere Daten betreffend der Identität des Teilnehmers IMSI abgelegt. Mittels einer Funkübertragung werden Daten und Sprache zwischen der mobilen Einheit ME und einer Basisstation BS ausgetauscht.

Die Basisstationen BS sind mit einer Mobilfunkzentrale MZ verbunden. Diese Mobilfunkzentrale MZ enthält ein Visitor Location Register sowie ein Home Location Register, in denen temporär (im Visitor Location Register) bzw. fest (im Home Location Register) Benutzerdaten abgespeichert sind. Von Bedeutung sind insbesondere die IMSI der Teilnehmer sowie jeweils der IMSI zugeordnete Verzeichniseinträge MSISDN. Gemäß der Erfindung sind im Teilnehmer-Kennungs-Modul SIM eine oder mehrere Berechnungsvorschriften RV enthalten, welche aus der permanent dort abgelegten Identität IMSI zumindest eine weitere Identität IMSI_{w} berechnen kann. In der Mobilfunkzentrale sind die einer originären IMSI zugeordneten weiteren Identitäten abgelegt oder werden nach der gleichen Berechnungsvorschrift wie in dem Teilnehmer-Kennungs-Modul erzeugt.

Die Figur 2 zeigt ein grobes Blockschaltbild eines Teilnehmer-Kennungs-Moduls SIM. Dieses SIM enthält eine Recheneinheit CPU, die jeweils mit einem Programmspeicher ROM, einem Arbeitsspeicher RAM sowie einem nicht flüchtigen Speicher SP, vorzugsweise einem E²PROM, verbunden ist. Im nicht flüchtigen Speicher SP ist die originäre Identität IMSI abgelegt sowie eine Rechenvorschrift RV, mit der auf Anfrage durch den Benutzer bzw. auf Anfrage des mobilen Endgerätes oder der Mobilfunkzentrale die jeweils neue Identität IMSI_{w} berechnet wird. Die Rechenvorschrift RV kann alternativ auch im ROM abgespeichert sein. Die nach der vorgegebenen Rechenvorschrift RV neu berechnete IMSI_{w} kann temporär auch im Arbeitsspeicher RAM abgelegt werden, so daß sie bei Anfrage durch das Mobilfunksystem sofort zur Verfügung steht.

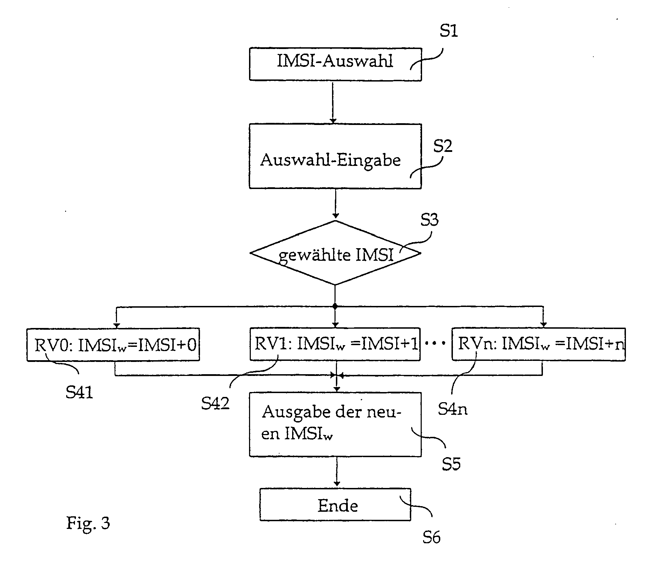

Die Figur 3 zeigt ein Beispiel für den Ablaufplan zur Auswahl einer weiteren Identität. In der Figur ist der Programmstart zur IMSI-Auswahl mit S1 bezeichnet. Die Auswahlanfrage wird entweder auf Anforderung durch den Benutzer durch eine Menüauswahl, oder auf Anforderung durch das Netz oder die mobile Einheit gestartet. Im Programmschritt S2 wird der Benutzer zur Eingabe aufgefordert bzw. es wird eine vorher getätigte Eingabe übernommen. Im Schritt S3 wird die Auswahleingabe aus Schritt S2 überprüft und es wird die entsprechende Rechenvorschrift gemäß Schritt S41, S42, ... S4n ausgeführt. Im Fall, daß die ausgewählte IMSI die originäre IMSI ist, wird keine Änderung vorgenommen, bzw. es wird zur originären IMSI der Wert "0" hinzuaddiert. Wird die Identität 1 ausgewählt, erfolgt eine Berechnung nach Rechenvorschrift RV1 und es wird zur originären IMSI der Wert 1 hinzuaddiert. Das gleiche gilt für alle weiteren möglichen Identitäten bis hin zur IMSIn in Schritt S4n.

Die neu berechnete IMSI_{w} wird anschließend in Schritt S5 ausgegeben. Die zur Authentisierung bzw. Überprüfung ausgegebene IMSI_{w} wird bei jeder Anfrage der mobilen Einheit an das Teilnehmer-Kennungs-Modul SIM neu berechnet, wobei in diesem Fall anstelle der Auswahleingabe (S2) der zuletzt eingegebene Wert übernommen wird. Schritt 2 kann in diesem Fall entfallen, bzw. besteht in einer Anweisung, dergemäß der zuletzt eingegebene Auswahl-Eingabe-Wert aus einem Speicher geladen wird.

Alternativ kann die im Schritt S4 (S41- S4n) berechnete neue IMSI_{w} bis zum Ausschalten der mobilen Einheit oder einer neuen IMSI-Auswahl durch den Benutzer temporär im RAM oder E²PROM des Teilnehmer-Kennungs-Moduls SIM abgelegt werden.

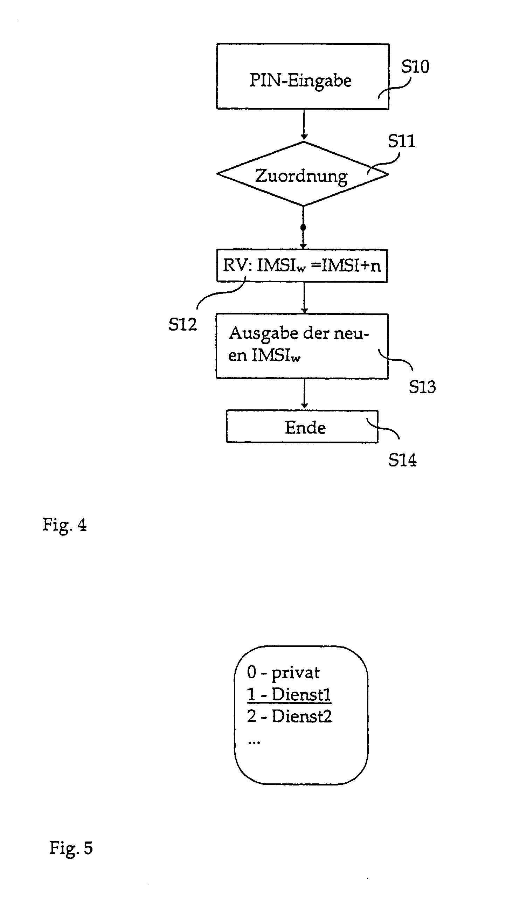

In Figur 4 ist beispielhaft ein Flußdiagramm für den Ablauf der IMSI-Auswahl durch PIN-Eingabe dargestellt. Im Schritt S10 wird durch die Eingabe einer neuen PIN das Auswahlprogramm gestartet. Im Schritt S11 wird entsprechend der ausgewählten PIN eine Zuordnung für die Rechenvorschrift in S12 erzeugt. In dieser Zuordnung wird festgelegt, welche Berechnungsvorschrift ausgewählt wird (in der Figur nicht dargestellt) bzw. welcher Identitätswert zur originären Identität IMSI mittels einer einzigen Rechenvorschrift RV addiert wird (Schritt S12).

Nach Durchführung der Berechnungsvorschrift S12, die im einfachsten Fall aus der Addition eines Identitätswertes zur originären IMSI besteht, wird wie bereits zu Figur 3, Schritt S5 beschrieben, die neue Identität ausgegeben.

Im Falle der IMSI-Auswahl mittels eines Schalters, der ggf. mehrere Schalterpositionen aufweisen kann, kann Schritt S10 entfallen, da beispielsweise aus der Schalterposition direkt eine neue Zuordnung bestimmt werden kann bzw. die Schalterposition direkt diese Zuordnung angibt.

Die in den Figuren 3 und 4 dargestellten Abläufe setzen natürlich voraus, daß in der Mobilfunkzentrale die durch die Berechnungsvorschriften erhaltbaren, d.h. möglichen IMSI's zur Überprüfung der Zugangsberechtigung zum Netz entweder abgespeichert sind oder analog zum Teilnehmer-Kennungs-Modul berechnet werden können, wobei in diesem Fall die zulässigen Identitätswerte abgelegt sein müssen.

Im Falle einer neuen Identität, die bei der Ausgabe des Teilnehmer-Kennungs-Moduls SIM nicht zugelassen war, können die neuen Identitätswerte, welche zur Berechnung der neuen Identität aus der originären IMSI benötigt werden, entweder direkt mittels eines Terminals oder unter Ausnutzung der OTA (over the air) -Funktionalität über die Luftschnittstelle eingegeben werden.

Die Figur 5 zeigt beispielhaft ein Menü, bei dem die möglichen Identitäten mit den entsprechenden Identitätswerten dargestellt sind. Die aktuell ausgewählte Identität wird im Menü durch Hervorhebung, z.B. Unterstreichung kenntlich gemacht. Die Auswahl einer neuen Identität kann beispielsweise mittels üblicherweise in einem Mobilfunkgerät angeordneten "Weiterschalttasten" und einer "OK"-Funktion erfolgen.

## Patentansprüche

1. Mobilfunksystem mit einer Vielzahl von mobilen Endgeräten (ME), welche über eine Luftschnittstelle mit einer Mobilfunkzentrale (MZ) zur Kommunikationssteuerung und gegebenenfalls zur Abrechnungserstellung verbunden sind, wobei die mobilen Endgeräte (ME) durch ein Teilnehmer-Kennungs-Modul (SIM), in dem Daten zur Zuordnung mindestens eines Benutzers gespeichert sind, gesteuert werden, wobei dem Teilnehmer-Kennungs-Modul (SIM) eine Identität (IMSI) zugeordnet ist, **dadurch gekennzeichnet, daß** das Teilnehmer-Kennungs-Modul (SIM) eine Berechnungsvorschrift enthält, welche aus der gespeicherten Identität (IMSI) mindestens eine weitere Identität (IMSI_{w}) berechnen kann, wobei die durch die Berechnungsvorschrift erzeugten Identitäten in der Mobilfunkzentrale (MZ) entsprechend zugeordnet sind.

2. Mobilfunksystem mit einer Vielzahl von mobilen Endgeräten (ME), welche über eine Luftschnittstelle mit einer Mobilfunkzentrale (MZ) zur Kommunikationssteuerung und gegebenenfalls zur Abrechnungserstellung verbunden sind, wobei die mobilen Endgeräte (ME) durch ein Teilnehmer-Kennungs-Modul (SIM), in dem Daten zur Zuordnung mindestens eines Benutzers gespeichert sind, gesteuert werden, wobei dem Teilnehmer-Kennungs-Modul (SIM) eine IMSI als Identität zugeordnet ist, **dadurch gekennzeichnet, daß** das Teilnehmer-Kennungs-Modul (SIM) zur Erzeugung eines Anforderungssignals, welches eine weitere IMSI als alternative Identität anfordert, ausgelegt ist und in Antwort auf dieses Anforderungssignal die Mobilfunkzentrale (MZ) eine dem Teilnehmer-Kennungs-Modul (SIM) zugeordnete weitere IMSI (IMSI_{w}) als alternative Identität mitteilt.

3. Mobilfunksystem nach Anspruch 1 oder 2, **dadurch gekennzeichnet, daß** die Berechnung bzw. Anforderung für eine neue Identität (IMSI_{w}) Tastatur- oder menügesteuert durch Bedienereingabe erfolgt.

4. Mobilfunksystem nach Anspruch 1 oder 2, **dadurch gekennzeichnet, daß** die Berechnung bzw. Anforderung für eine neue Identität (IMSI_{w}) durch Eingabe einer PIN initialisiert wird.

5. Mobilfunksystem nach einem der Ansprüche 1 bis 4, **dadurch gekennzeichnet, daß** zusammen mit der weiteren Identität (IMSI_{w}) auch ein weiterer Verzeichniseintrag und/ oder ein weiterer Schlüssel berechnet wird.

6. Verfahren zum Betrieb von mobilen Endgeräten (ME) eines Mobilfunksystems, welche durch ein Teilnehmer-Kennungs-Modul, welches für den Betrieb mit mindestens zwei Identitäten geeignet ist, gesteuert werden, **dadurch gekennzeichnet, daß** aus einer einzigen, im Teilnehmer-Kennungs-Modul (SIM) gespeicherten Identität (IMSI) die weiteren Identitäten durch eine Berechnungsvorschrift bei Bedarf erzeugt werden.

7. Verfahren nach Anspruch 6, **dadurch gekennzeichnet, daß** die Berechnung im Teilnehmer-Kennungs-Modul (SIM) ausgeführt wird.

8. Verfahren nach Anspruch 6, **dadurch gekennzeichnet, daß** die Berechnung in der Mobilfunkzentrale (MZ) auf Anforderung des mobilen Endgerätes (ME) durchgeführt und die neue Identität über die Luftschnittstelle des Mobilfunksystems dem mobilen Endgerät (ME) mitgeteilt wird.

9. Verfahren nach einem der Ansprüche 6 oder 7, **dadurch gekennzeichnet, daß** die Einstellung auf eine Identität durch Eingabe einer persönlichen Identifizierungsnummer (PIN) menü- und/oder tastaturgesteuert erfolgt.

10. Verfahren nach einem der Ansprüche 6 bis 9, **dadurch gekennzeichnet, daß** zusammen mit der weiteren Identität (IMSI_{w}) auch ein weiterer Verzeichniseintrag und/ oder ein weiterer Schlüssel berechnet wird.

11. Verfahren nach einem der Ansprüche 6 bis 10, **dadurch gekennzeichnet, daß** die jeweils weitere Identität (IMSI_{w}) bei jeder Überprüfung bzw. Anfrage durch die Mobilfunkzentrale (MZ) oder das mobile Endgerät (ME) neu berechnet wird.

12. Verfahren nach einem der Ansprüche 6 bis 10, **dadurch gekennzeichnet, daß** die jeweils weitere Identität (IMSI_{w}) bis zu einer neuen Auswahl einer neuen Identität (IMSI) oder bis zum Abschalten des mobilen Endgerätes (ME) temporär im Teilnehmer-Kennungs-Modul (SIM) gespeichert wird.

13. Teilnehmer-Kennungs-Modul (SIM) für ein mobiles Endgerät (ME) in einem Mobilfunksystem, in dem eine Identität (IMSI) für einen Benutzer abgelegt ist, **dadurch gekennzeichnet, daß** im Teilnehmer-Kennungs-Modul (SIM) eine Berechnungsvorschrift abgelegt ist, welche aus der gespeicherten Identität (IMSI) mindestens eine weitere Identität (IMSI_{w}) berechnen kann.

14. Teilnehmer-Kennungs-Modul (SIM) für ein mobiles Endgerät (ME) in einem Mobilfunksystem, in dem eine IMSI als Identität für einen Benutzer abgelegt ist, **dadurch gekennzeichnet, daß** das Teilnehmer-Kennungs-Modul (SIM) zur Erzeugung eines Anforderungssignales ausgelegt ist, welches eine weitere IMSI (IMSI_{w}) als alternative Identität anfordert.

15. Teilnehmer-Kennungs-Modul (SIM) nach Anspruch 13 oder 14, **dadurch gekennzeichnet, daß** im Teilnehmer-Kennungs-Modul ein temporärer Speicherbereich (RAM) enthalten ist, in dem eine berechnete oder von der Mobilfunkzentrale (MZ) mitgeteilte weitere Identität (IMSI_{w}) zwischengespeichert werden kann.

16. Teilnehmer-Kennungs-Modul nach einem der Ansprüche 13 bis 15, **dadurch gekennzeichnet, daß** ein Speicheradresszeiger vorgesehen ist, welcher auf einen ausgewählten temporären Speicherplatz zeigt, in dem die aktuell ausgewählte Identität (IMSI, IMSI_{w}) abgelegt ist.

## Claims

1. A mobile communication system having a plurality of mobile terminals (ME) connected with a mobile switching center (MZ) via an over-the-air interface for communication control and optionally for billing, the mobile terminals (ME) being controlled by a subscriber identity module (SIM) in which data for associating at least one user are stored, the subscriber identity module (SIM) having an identity (IMSI) associated therewith, **characterized in that** the subscriber identity module (SIM) contains a calculation rule for calculating from the stored identity (IMSI) at least one further identity (IMSI_{w}), the identities generated by the calculation rule being associated accordingly in the mobile switching center (MZ).

2. A mobile communication system having a plurality of mobile terminals (ME) connected with a mobile switching center (MZ) via an over-the-air interface for communication control and optionally for billing, the mobile terminals (ME) being controlled by a subscriber identity module (SIM) in which data for associating at least one user are stored, the subscriber identity module (SIM) having an IMSI as the identity associated therewith, **characterized in that** the subscriber identity module (SIM) is designed to generate a request signal which requests a further IMSI as an alternative identity, and in response to this request signal the mobile switching center (MZ) communicates a further IMSI (IMSI_{w}) associated with the subscriber identity module (SIM) as the alternative identity.

3. The mobile communication system according to claim 1 or 2, **characterized in that** the calculation or request for a new identity (IMSI_{w}) is effected by a user entry via keyboard or menu.

4. The mobile communication system according to claim 1 or 2, **characterized in that** the calculation or request for a new identity (IMSI_{w}) is initialized by entry of a PIN.

5. The mobile communication system according to any of claims 1 to 4, **characterized in that** a further directory entry and/or a further key are calculated together with the further identity (IMSI_{w}).

6. A method for operating mobile terminals (ME) of a mobile communication system which are controlled by a subscriber identity module suitable for operation with at least two identities, **characterized in that** the further identities are generated by a calculation rule, if required, from a single identity (IMSI) stored in the subscriber identity module (SIM).

7. The method according to claim 6, **characterized in that** the calculation is executed in the subscriber identity module (SIM).

8. The method according to claim 6, **characterized in that** the calculation is performed in the mobile switching center (MZ) at the request of the mobile terminal (ME), and the new identity is communicated to the mobile terminal (ME) via the over-the-air interface of the mobile communication system.

9. The method according to either of claims 6 and 7, **characterized in that** an identity is set by entry of a personal identification number (PIN) via menu and/or keyboard.

10. The method according to any of claims 6 to 9, **characterized in that** a further directory entry and/or a further key are calculated together with the further identity (IMSI_{w}).

11. The method according to any of claims 6 to 10, **characterized in that** the further identity (IMSI_{w}) is newly calculated at each check or request by the mobile switching center (MZ) or the mobile terminal (ME).

12. The method according to any of claims 6 to 10, **characterized in that** the further identity (IMSI_{w}) is stored temporarily in the subscriber identity module (SIM) until a new identity (IMSI) is selected or the mobile terminal (ME) is turned off.

13. A subscriber identity module (SIM) for a mobile terminal (ME) in a mobile communication system in which an identity (IMSI) for a user is stored, **characterized in that** a calculation rule is stored in the subscriber identity module (SIM) for calculating from the stored identity (IMSI) at least one further identity (IM-SI_{w}).

14. A subscriber identity module (SIM) for a mobile terminal (ME) in a mobile communication system in which an IMSI as the identity for a user is stored, **characterized in that** the subscriber identity module (SIM) is designed to generate a request signal which requests a further IMSI (IMSI_{w}) as an alternative identity.

15. The subscriber identity module (SIM) according to claim 13 or 14, **characterized in that** the subscriber identity module contains a temporary memory area (RAM) for temporarily storing a further identity (IMSI_{w}) which is calculated or communicated by the mobile switching center (MZ).

16. The subscriber identity module according to any of claims 13 to 15, **characterized in that** a memory address pointer is provided for pointing to a selected temporary memory location where the currently selected identity (IMSI, IMSI_{w}) is stored.

## Revendications

1. Système de radiotéléphonie mobile comprenant une pluralité de terminaux (ME) mobiles, lesquels sont reliés par une interface radio à un central de radiotéléphonie mobile (MZ) pour la commande de communication et le cas échéant pour la facturation, les terminaux (ME) mobiles étant commandés par un module d'identification d'abonné (SIM) dans lequel sont stockées des données pour l'attribution d'au moins un utilisateur, une identité (IMSI) étant attribuée au module d'identification d'abonné (SIM), **caractérisé en ce que** le module d'identification d'abonné (SIM) contient une spécification de calcul qui peut facturer au moins une autre identité (IMSI_{w}) à partir de l'identité (IMSI) mémorisée, les identités générées par la spécification de calcul étant attribuées de façon correspondante dans le central de radiotéléphonie mobile (MZ).

2. Système de radiotéléphonie mobile comprenant une pluralité de terminaux mobiles (ME), qui sont reliés par une interface radio à un central de radiotéléphonie mobile (MZ) pour la commande de communication et le cas échéant pour la facturation, les terminaux (ME) mobiles étant commandés par un module d'identification d'abonné (SIM), dans lequel sont stockées des données pour l'attribution d'au moins un utilisateur, une IMSI étant attribuée comme identité au module d'identification d'abonné (SIM), **caractérisé en ce que** le module d'identification d'abonné (SIM) est conçu pour générer un signal de demande qui exige une autre IMSI comme identité alternative, et **en ce que**, en réponse à ce signal de demande, le central de radiotéléphonie mobile (MZ) communique, comme identité alternative, une IMSI (IMSI_{w}) attribuée au module d'identification d'abonné (SIM).

3. Système de radiotéléphonie mobile selon la revendication 1 ou 2, **caractérisé en ce que** le calcul ou la demande pour une nouvelle identité (IMSI_{w}) s'effectue de façon commandée par clavier ou par menu au moyen d'une entrée par opérateur.

4. Système de radiotéléphonie mobile selon la revendication 1 ou 2, **caractérisé en ce que** le calcul ou la demande pour une nouvelle identité (IMSI_{w}) est initialisé par l'entrée d'un PIN (numéro d'identification personnel).

5. Système de radiotéléphonie mobile selon l'une des revendications 1 à 4, **caractérisé en ce que**, en même temps que l'autre identité (IMSI_{w}), on calcule également une nouvelle inscription sur liste et/ou un autre code.

6. Procédé pour l'exploitation de terminaux mobiles (ME) d'un système de radiotéléphonie mobile, qui sont commandés par un module d'identification d'abonné, lequel convient pour l'exploitation avec au moins deux identités, **caractérisé en ce que**, à partir d'une unique identité (IMSI) stockée dans le module d'identification d'abonné (SIM), les autres identités sont générées au besoin par une spécification de calcul.

7. Procédé selon la revendication 6, **caractérisé en ce que** le calcul est exécuté dans le module d'identification d'abonné (SIM).

8. Procédé selon la revendication 6, **caractérisé en ce que** le calcul est effectué au central de radiotéléphonie mobile (MZ) à la demande du terminal mobile (ME) et la nouvelle identité est communiquée au terminal mobile (ME) par l'interface radio du système de radiotéléphonie mobile.

9. Procédé selon l'une des revendications 6 ou 7, **caractérisé en ce que** le réglage sur une identité par l'entrée d'un numéro d'identification personnel (PIN) s'effectue de façon commandée par menu et/ou par clavier.

10. Procédé selon l'une des revendications 6 à 9, **caractérisé en ce que** également une autre inscription sur liste et/ou un autre code est calculé conjointement avec l'autre identité (IMSI_{w}).

11. Procédé selon l'une des revendications 6 à 10, **caractérisé en ce que** l'autre identité (IMSI_{w}) respective est calculée à nouveau lors de chaque contrôle ou de chaque interrogation par le central de radiotéléphonie mobile (MZ) ou le terminal mobile (ME).

12. Procédé selon l'une des revendication 6 à 10, **caractérisé en ce que** l'autre identité (IMSI_{w}) respective est stockée temporairement dans le module d'identification d'abonné (SIM) jusqu'à une nouvelle sélection d'une nouvelle identité (IMSI) ou jusqu'à la déconnexion du terminal mobile (ME).

13. Module d'identification d'abonné (SIM) pour un terminal mobile (ME) dans un système de radiotéléphonie mobile, dans lequel est déposée une identité (IMSI) pour un utilisateur, **caractérisé en ce que**-dans le module d'identification d'abonné (SIM) est déposée une spécification de calcul qui permet de calculer au moins une autre identité (IMSI_{w}) à partir de l'identité stockée (IMSI).

14. Module d'identification d'abonné (SIM) pour un terminal (ME) mobile dans un système de radiotéléphonie mobile, dans lequel est déposée une IMSI comme identité pour un utilisateur, **caractérisé en ce que** le module d'identification d'abonné (SIM) est conçu pour générer un signal de demande qui demande une autre IMSI (IMSI_{w}) comme identité alternative.

15. Module d'identification d'abonné (SIM) selon la revendication 13 ou 14, **caractérisé en ce que** le module d'identification d'abonné contient une zone de stockage (RAM) temporaire dans laquelle une autre identité (IMSI_{w}), calculée ou communiquée par le central de radiotéléphonie mobile (MZ), peut être stockée provisoirement.

16. Module d'identification d'abonné selon l'une des revendications 13 à 15, **caractérisé en ce qu'**il est prévu un index d'adresses de mémoire, qui indique un emplacement de mémoire temporaire sélectionné, dans lequel est déposée l'identité (IMSI, IMSI_{w}) actuellement sélectionnée.
